# EUROPEAN PATENT SPECIFICATION

(11) **EP 2 608 498 B1**
(45) Date of publication and mention of the grant of the patent: **29.08.2018**
(21) Application number: 11817703.9
(22) Date of filing: 18.05.2011
(51) Int. Cl.: H04M 1/725, H01Q 1/46, H01Q 1/24

(54) **METHOD FOR USING HANDLE ROPE OF FIXED WIRELESS TELEPHONE AS FREQUENCY MODULATION (FM) ANTENNA AND FIXED WIRELESS TELEPHONE**
VERFAHREN ZUR VERWENDUNG DES GRIFFBANDS EINES FESTEN SCHNURLOSEN TELEFONS ALS FREQUENZMODULATIONS (FM)-ANTENNE UND FESTES SCHNURLOSES TELEFON
PROCÉDÉ D'UTILISATION DU CORDON DE POIGNÉE D'UN TÉLÉPHONE SANS FIL FIXE COMME ANTENNE À MODULATION DE FRÉQUENCE (FM) ET TÉLÉPHONE SANS FIL FIXE

(30) Priority: 17.08.2010 CN 201010256131
(43) Date of publication of application: 26.06.2013
(73) Proprietor: Huizhou TCL Mobile Communication Co., Ltd., Huizhou, Guangdong 516006 (CN)
(72) Inventor: KUANG, Xianliang, Huizhou Guangdong 516006 (CN)
(74) Representative: Brachmann, Roland W.
(86) International application number: PCT/CN2011/074214
(87) International publication number: WO 2012/022176

(56) References cited:
- EP-A1- 2 077 601
- CN-A- 1 128 452
- CN-A- 101 924 834
- CN-U- 201 781 540
- CN-Y- 201 178 407
- DE-U1- 29 916 918
- GB-A- 1 255 297
- JP-A- H0 247 956
- US-A1- 2008 261 538

## Description

The present invention relates to the field of fixed wireless phone and in particular, to a method of using handle cord of a fixed wireless phone as FM antenna and a fixed wireless phone.

Along with the development of communications technologies, fixed wireless phones have become increasingly popular. Currently, it is common to see applications of FM radio functions on fixed wireless phones. To add a separate FM telescopic antenna for a fixed wireless phone having FM function, however, not only makes the fixed wireless phone ugly (since there has already been an antenna for the fixed wireless phone), but also increases the cost.

DE 299 16 918 U1 discloses a telephone comprising a housing with a receiver, wherein a dialing keyboard is optionally arranged in the housing or in the receiver, and the receiver is optionally connected by cable or radio to an electronic circuit arranged in the housing and provided with a cable connection for a telephone fixed network, wherein, in the housing, a second electronic circuit for radiotelephony, optionally integrated in the electronic circuit, is arranged, which is connected in turn to an antenna and, on the other hand, to the dialing keyboard, wherein the electronic circuit for the fixed-network operation or the second electronic circuit for the radio-network operation can be actuated alternatively with the dialing keyboard.

US 2008/0261538 A1 discloses relates to a portable communication device arrangement comprising a main unit and an auxiliary unit. The main unit includes an electrical interface to an auxiliary unit, a ground plane dimensioned for antenna operation at a multiple of a quarter of a wavelength of a desired frequency, and a radio communication unit connected to the ground plane and to the electrical interface. The auxiliary unit comprises at least one electrical conduct or to be connected to the electrical interface and including a first radio frequency trap, where the distance between the first radio frequency trap and an end of the conductor that is to be connected to the electrical interface corresponds to an odd multiple of a quarter of a wavelength of the desired frequency. The invention provides a good antenna through reuse of elements already provided in relation to a portable communication device.

GB 1255297 A discloses a telephone instrument comprising a handset and an instrument body on which the handset rests when not in use, and in which speech signals may be conveyed between the handset and the instrument body via radio channels without a cable interconnection. A connecting cable is attached permanently to one member, e.g. the instrument body, and is attachable non-permanently to the other member e.g. the handset, means being provided so that when the cable connection is made the telephone instrument operates in conventional manner and the radio equipment is switched off and when the connection is separated the radio equipment is switched on. A plug-in connection is provided on the instrument body for-the connecting cable which switches off the radio equipment in the body when the plug is inserted and connects the earpiece and microphone to the appropriate terminals in the body. The connecting cord is of the multicore type and when the plug is withdrawn it provides an aerial for transmission and reception at the handset.

JP H 0247956 A discloses a cordless handset system adding a handset being an accessory and a portable set to a usual single telephone set or push-button telephone set. Signals sent/received to/from a telephone set main body via a cord are coupled with a connector receptacle. In this case, the signal is sent in a radio wave at a carrier frequency via an amplifier incorporating an FM modulator, a mixer, a filter, an amplifier, an antenna multi-coupler and an antenna 2. Moreover, a signal corresponding to the transmission signal received to the antenna at a carrier frequency becomes a transmission signal via an amplifier, a mixer, a filter, and an amplifier built in the FM modulator similar to the case with the reception signal. A caption is an oscillator for generating the carrier frequency and a caption is an oscillator for generating the carrier frequency. Thus, the cordless handset system having the similar function to that of a cordless telephone set on market is obtained.

Therefore, the prior art is in need of improvement and development.

The technical problem that the present invention is to solve is to provide a method of using handle cord of a fixed wireless phone as FM antenna and a fixed wireless phone that overcome the above drawback of the prior art, which has a simple structure, low manufacturing cost, and excellent FM reception property.

The technology employed by the present invention to solve the technical problem is as follows:
A fixed wireless phone having FM radio function, comprising a FM chip, a baseband chip, and a handle, said handle being connected with said baseband chip via four wires inside the handle cord, wherein the four wires inside said handle cord comprise two wires for connecting the transmitter and two wires for connecting the receiver, wherein a FM antenna signal access point is disposed on one of the two wires that are connected with the receiver to be used as an FM antenna, a first ferrite bead is connected in series between said FM antenna signal access point and the output terminal of said baseband chip, a FM frequency selective circuit is connected with said FM antenna signal access point, and said FM frequency selective circuit is connected with said FM chip.

According to an embodiment, a second ferrite bead, a third ferrite bead, and a fourth ferrite bead are connected in series on three other wires of the four wires connecting said baseband chip and said handle, respectively.

According to an embodiment, said first ferrite bead is a 2,500 ohm ferrite bead.

According to an embodiment, the FM frequency selective circuit comprises a first capacitor, a second capacitor, a third capacitor and an inductor, the first terminal of said first capacitor is connected with said FM antenna signal access point, and the second terminal of said first capacitor is connected with said FM chip via said inductor. Furthermore, the first terminal of said first capacitor is further connected with a reference ground via said second capacitor, and the second terminal of said first capacitor is connected with the reference ground via said third capacitor.

According to an embodiment, said FM chip is a RDA5802E chip.

A method is suggested of using a handle cord of a fixed wireless phone as FM antenna, said fixed wireless phone having FM radio function and four wires of the handle cord connecting a transmitter and a receiver of a handle of the fixed wireless phone with a baseband chip, wherein it comprises the steps of:
A. Selecting one of the two wires of the handle cord that connect the receiver with the baseband chip as FM antenna, disposing a FM antenna signal access point on said selected wire , and connecting a first ferrite bead in series between said FM antenna signal access point and the baseband chip;
B. Connecting a FM frequency selective circuit with said FM antenna signal access point and connecting said FM frequency selective circuit with a FM chip.

The method of using handle cord of a fixed wireless phone as FM antenna and the fixed wireless phone according to the present invention use the handle cord of a fixed wireless phone as FM antenna and add a corresponding frequency selective circuit, which is capable of not only saving cost and preserving the appearance of the fixed wireless phone, but also achieving an excellent reception property for the FM antenna.

The aforementioned characteristics, features and advantages of the invention as well as the way they are achieved will be further illustrated in connection with the following examples and considerations as discussed in view of the figures.
- Fig. 1: is an illustrative diagram of the fixed wireless phone having FM radio function according to an embodiment of the present invention;
- Fig.2: is a flow chart of the method of using handle cord of a fixed wireless phone as FM antenna according to an embodiment of the present invention.

The method of using handle cord of a fixed wireless phone as FM antenna and the fixed wireless phone according to the present invention use the handle cord as FM antenna. The FM antenna has a bandwidth between 88MHz ∼ 108MHz, the central frequency point *f*₀ is 98 MHz, while the wavelength *λ* = *c*/*f*₀*.* c is light velocity that is 3 · 10⁸m/s. The wavelength of the central frequency point can be obtained through computation to be *λ* = 3.06*m*. A typical handle cord has a length of 3m and is spiral with the length after twisting typically at 0.5m, which is feasible to function as a FM antenna. To make the object, technology and advantages of the present invention more clearly understood, the present invention is further described in detail below with reference to the accompanying drawings and an embodiment. It should be understood that the specific embodiment described herein is only intended to explain the present invention, not to limit the present invention.

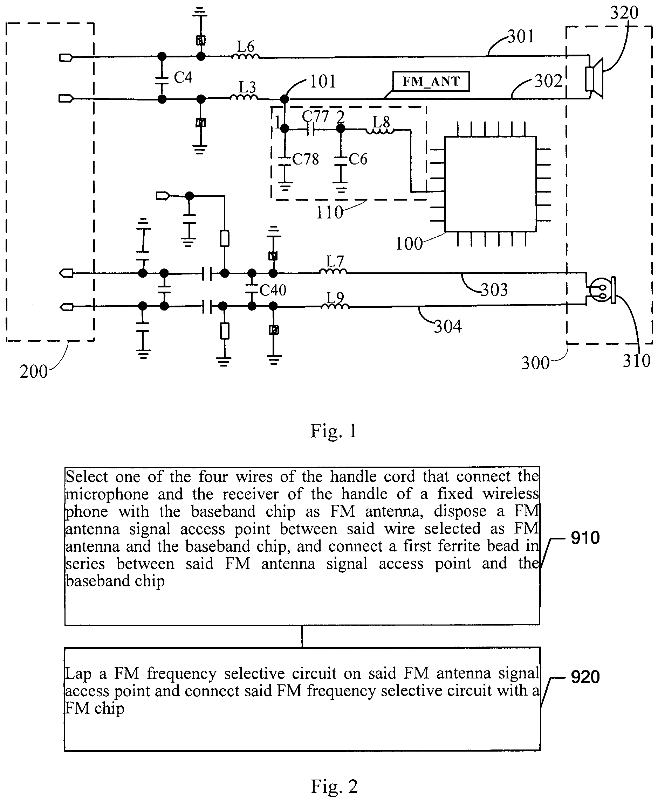

As shown in Fig.1, a fixed wireless phone having FM radio function according to an embodiment of the present invention comprises a FM chip 100, a baseband chip 200, and a handle 300, said handle 300 being connected with said baseband chip 200 via four wires inside the handle cord 301, 302, 303 and 304, wherein said handle 300 comprises a receiver 320 and a transmitter 310, the handle cord comprises wires connecting the handle and the baseband BB, the four wires of said handle cord comprise two wires 303 and 304 for connecting the transmitter 310 and two wires 301 and 302 for connecting the receiver 320.

To realize the circuit, select one of the four wires that connect said baseband chip 200 with said handle 300 as FM antenna: FM_ANT. Dispose a FM antenna signal access point 101 on said wire selected as FM antenna. In the embodiment shown in Fig.1, the FM antenna signal access point 101 is disposed on the wire 302 of the two wires that are connected with the receiver 320. Moreover, a first ferrite bead L3 is connected in series between said FM antenna signal access point 101 and the output terminal of said baseband chip 200 for suppressing high frequency noise and peak interference on the signal wire and the power cord, a FM frequency selective circuit 110 is lapped with said FM antenna signal access point 101, and said FM frequency selective circuit 110 is connected with said FM chip 100.

A preferred embodiment is shown in Fig.1, a 2,500 ohm ferrite bead is connected in series on a wire 302 between the audio output terminal of the baseband chip 200 and the receiver 320 as the first ferrite bead L3 for preventing FM signals from flowing to the baseband chip 200 at the left of the FM antenna signal access point 101, such that FM signals flow to the frequency selective circuit 110 at the right of the FM antenna signal access point 101, and at the same time, preventing interference signals from the baseband chip 200 from flowing to the FM frequency selective circuit 110 at the right.

As shown in Fig.1, said FM frequency selective circuit 110 comprises a first capacitor C77, a second capacitor C78, a third capacitor C6 and an inductor L8, the first terminal 1 of said first capacitor C77 is connected with said FM antenna signal access point 101, and the second terminal 2 of said first capacitor C77 is connected with said FM chip 100 via said inductor L8; Furthermore, the first terminal 1 of said first capacitor C77 is further connected with a reference ground via said second capacitor C78, and the second terminal 2 of said first capacitor C77 is further connected with the reference ground via said third capacitor C6.

Preferably, said FM chip 100 is a RDA5802E chip. In this way, the third capacitor C6, the first capacitor C77, the second capacitor C78 and the inductor L8 form a FM frequency selective circuit with the 50PF capacitor internal to the FM chip RDA5802E, wherein values of said C6, C77, C78 and L8 can be adjusted according to different FM chips.

To further improve the FM signal reception sensitivity, as shown in Fig.1, a second ferrite bead L6, a third ferrite bead L7, and a fourth ferrite bead L9 are connected in series on three other wires 301, 303 and 304 of the four wires 301, 302, 303 and 304 connecting said baseband chip 200 and said handle 300, respectively. Since the four wires of the handle cord are parallel, interference signals from the baseband chip 200 will be coupled to the wire 302, FM_ANT, if the ferrite beads are not added, which could consequently affect the FM signal reception sensitivity.

From the above description, it can be seen that the embodiment of the present invention uses a handle cord as FM antenna and adds a corresponding frequency selective circuit, which is capable of not only saving cost and preserving the appearance of the fixed wireless phone, but also achieving an excellent reception property for the FM antenna. In the specific embodiment, the handle cord functions as FM antenna by primarily adding two circuits. As shown in Fig.1, one is the 2,500 ohm ferrite bead L3 for preventing FM signals from flowing to the baseband chip 200 at the left, such that FM signals flow to the FM frequency selective circuit 110 at the right, and at the same time, preventing interference signals from the baseband chip 200 from flowing to the FM frequency selective circuit 110. The other one is the FM frequency selective circuit 110 formed by C77, C78, C6 and L8 with the 50PF capacitor internal to RDA5802E that is connected with the FM chip, thereby realizing the fixed wireless phone having FM function according to the present invention.

Based on the above fixed wireless phone having FM radio function, the embodiment of the present invention further provides a method of using handle cord of the fixed wireless phone as FM antenna, as shown in Fig.2, which comprises the steps of:

| | |
|---|---|
| Step S910: | Selecting one of the four wires 301, 302, 303 and 304 of the handle cord that connect the transmitter 310 and the receiver 320 of the handle of a fixed wireless phone with the baseband chip 200 as FM antenna, disposing a FM antenna signal access point 101 between said wire selected as FM antenna and the baseband chip 200, as shown in Fig.1, selecting the wire 302 out of two wires 301 and 302 that connect the receiver 320 to dispose said FM antenna signal access point 101 thereon, and connecting a first ferrite bead L3 in series between said FM antenna signal access point 101 and the baseband chip 200; |
| Step S920: | Lapping a FM frequency selective circuit 110 on said FM antenna signal access point 101 and connecting said FM frequency selective circuit 110 with a FM chip 100. |

The method of using handle cord of a fixed wireless phone as FM antenna and the fixed wireless phone according to the present invention use the handle cord of a fixed wireless phone as FM antenna and add a corresponding frequency selective circuit, which is capable of not only saving cost and preserving the appearance of the fixed wireless phone, but also achieving an excellent reception property for the FM antenna.

## Claims

1. A fixed wireless phone having FM radio function, comprising a FM chip (100), a baseband chip (200), and a handle (300), said handle being connected with said baseband chip via four wires (301, 302, 303, 304) inside a handle cord, wherein the four wires (301, 302, 303, 304) inside said handle cord comprise two wires (303, 304) for connecting a transmitter (310) and two wires (301, 302) for connecting a receiver (320), wherein a FM antenna signal access point (101) is disposed on one (302) of the two wires (301, 302) that are connected with the receiver (320) to be used as an FM antenna (FM_ANT), a first ferrite bead (L3) is connected in series between said FM antenna signal access point and a terminal of said baseband chip, a FM frequency selective circuit (110) is connected with said FM antenna signal access point, and said FM frequency selective circuit is connected with said FM chip.

2. The fixed wireless phone according to any of the preceding claims, wherein a second ferrite bead (L6), a third ferrite bead (L7), and a fourth ferrite bead (L9) are connected in series on three other wires (301, 303, 304) of the four wires connecting said baseband chip (200) and said handle (300), respectively.

3. The fixed wireless phone according to any of the preceding claims, wherein said first ferrite bead (L3) is a 2,500 ohm ferrite bead.

4. The fixed wireless phone according to any of the preceding claims, wherein the FM frequency selective circuit comprises a first capacitor (C77), a second capacitor (C78), a third capacitor (C6) and an inductor (L8), the first terminal of said first capacitor (C77) is connected with said FM antenna signal access point (101), and the second terminal of said first capacitor (C77) is connected with said FM chip (100) via said inductor (L8); and wherein the first terminal of said first capacitor is further connected with a reference ground via said second capacitor (C78), and the second terminal of said first capacitor is connected with the reference ground via said third capacitor (C6).

5. The fixed wireless phone according to any of the preceding claims, wherein said FM chip (100) is a RDA5802E chip.

6. The fixed wireless phone according to any of the preceding claims, wherein said handle cord has a length of 3 m and is spiral with a length after twisting typically at 0.5m, which is feasible to function as a FM antenna.

7. A method of using a handle cord of a fixed wireless phone as FM antenna, the fixed wireless phone having FM radio function and four wires of the handle cord, wherein the four wires comprise two wires for connecting a transmitter and two wires for connecting a receiver of a handle of the fixed wireless phone with a baseband chip (200), the method comprising the steps of:
A. Selecting one (302) of the two wires of the handle cord that connect the receiver with the baseband chip (200) as the FM antenna (FM_ANT), disposing a FM antenna signal access point (101) on said selected wire, and connecting a first ferrite bead (L3) in series between said FM antenna signal access point and the baseband chip;
B. Connecting a FM frequency selective circuit (110) with said FM antenna signal access point and connecting said FM frequency selective circuit with a FM chip (100).

## Patentansprüche

1. Ortsfestes drahtloses Telefon mit UKW-Radiofunktion, umfassend einen UKW-Chip (100), einen Basisbandchip (200) und einen Griff (300), wobei der Griff über vier Drähte (301, 302, 303, 304) im Inneren einer Griffkordel mit dem Basisbandchip verbunden ist, wobei die vier Drähte (301, 302, 303, 304) im Inneren der Griffkordel zwei Drähte (303, 304) zum Verbinden eines Senders (310) und zwei Drähte (301, 302) zum Verbinden eines Empfängers (320) umfassen, wobei ein UKW-Antennensignalzugangspunkt (101) an einem (302) der zwei Drähte (301, 302), die mit dem Empfänger (320) verbunden sind, angeordnet ist, um als eine UKW-Antenne (UKW_ANT) verwendet zu werden, eine erste Ferritperle (L3) in Reihe zwischen dem UKW-Antennensignalzugangspunkt und einem Anschluss des Basisbandchips verbunden ist, eine UKWfrequenzselektive Schaltung (110) mit dem UKW-Antennensignalzugangspunkt verbunden ist und die UKWfrequenzselektive Schaltung mit dem UKW-Chip verbunden ist.

2. Ortsfestes drahtloses Telefon nach einem der vorhergehenden Ansprüche, wobei eine zweite Ferritperle (L6), eine dritte Ferritperle (L7) und eine vierte Ferritperle (L9) an drei jeweiligen anderen Drähten (301, 303, 304) der vier Drähte, die den Basisbandchip (200) und den Griff (300) verbinden, in Reihe verbunden sind.

3. Ortsfestes drahtloses Telefon nach einem der vorhergehenden Ansprüche, wobei die erste Ferritperle (L3) eine 2.500-Ohm-Ferritperle ist.

4. Ortsfestes drahtloses Telefon nach einem der vorhergehenden Ansprüche, wobei die UKWfrequenzselektive Schaltung eine erste Kapazität (C77), eine zweite Kapazität (C78), eine dritte Kapazität (C6) und eine Induktivität (L8) umfasst, wobei der erste Anschluss der ersten Kapazität (C77) mit dem UKW-Antennensignalzugangspunkt (101) verbunden ist und der zweite Anschluss der ersten Kapazität (C77) über die Induktivität (L8) mit dem UKW-Chip (100) verbunden ist; und wobei der erste Anschluss der ersten Kapazität ferner über die zweite Kapazität (C78) mit einer Bezugsmasse verbunden ist und der zweite Anschluss der ersten Kapazität über die dritte Kapazität (C6) mit der Bezugsmasse verbunden ist.

5. Ortsfestes drahtloses Telefon nach einem der vorhergehenden Ansprüche, wobei der UKW-Chip (100) ein RDA5802E-Chip ist.

6. Ortsfestes drahtloses Telefon nach einem der vorhergehenden Ansprüche, wobei die Griffkordel eine Länge von 3 m hat und nach dem Verdrehen spiralig eine Länge von typischerweise 0,5 m aufweist, was geeignet ist, um als UKW-Antenne zu fungieren.

7. Verfahren zum Verwenden einer Griffkordel eines ortsfesten drahtlosen Telefons als UKW-Antenne, wobei das ortsfeste drahtlose Telefon eine UKW-Radiofunktion und vier Drähte der Griffkordel hat, wobei die vier Drähte zwei Drähte zum Verbinden eines Senders und zwei Drähte zum Verbinden eines Empfängers eines Griffs des ortsfesten drahtlosen Telefons mit einem Basisbandchip (200) umfassen, wobei das Verfahren die folgenden Schritte umfasst:
A. Auswählen von einem (302) der zwei Drähte der Griffkordel, die den Empfänger mit dem Basisbandchip (200) verbinden, als die UKW-Antenne (UKW_ANT), Anordnen eines UKW-Antennensignalzugangspunkts (101) an dem ausgewählten Draht und Verbinden einer ersten Ferritperle (L3) in Reihe zwischen dem UKW-Antennensignalzugangspunkt und dem Basisbandchip;
B. Verbinden einer UKW-frequenzselektiven Schaltung (110) mit dem UKW-Antennensignalzugangspunkt und Verbinden der UKW-frequenzselektiven Schaltung mit einem UKW-Chip (100).

## Revendications

1. Téléphone sans fil fixe ayant une fonction radio FM, comprenant une puce FM (100), une puce de bande de base (200), et une poignée (300), ladite poignée étant connectée à ladite puce de bande de base via quatre fils (301, 302, 303, 304) dans un cordon de poignée, dans lequel les quatre fils (301, 302, 303, 304) dans le cordon de poignée comprennent deux fils (303, 304) pour connecter un émetteur (310) et deux fils (301, 302) pour connecter un récepteur (320), dans lequel un point d'accès de signal d'antenne FM (101) est disposé sur un (302) des deux fils (301, 302) qui sont connectés au récepteur (320) devant être utilisé comme une antenne FM (FM_ANT), une première bille de ferrite (L3) est connectée en série entre le point d'accès de signal d'antenne FM et une borne de ladite puce de bande de base, un circuit sélectif de fréquence FM (110) est connecté audit point d'accès de signal d'antenne FM, et ledit circuit sélectif de fréquence FM est connecté à ladite puce FM.

2. Téléphone sans fil fixe selon l'une quelconque des revendications précédentes, dans lequel une seconde bille de ferrite (L6), une troisième bille de ferrite (L7) et une quatrième bille de ferrite (L9) sont connectées en série sur les trois autres fils (301, 303, 304) parmi les quatre fils connectant ladite puce de bande de base (200) et ladite poignée (300), respectivement.

3. Téléphone sans fil fixe selon l'une quelconque des revendications précédentes, dans lequel la première bille de ferrite (L3) est une bille de ferrite à 2500 ohms.

4. Téléphone sans fil fixe selon l'une quelconque des revendications précédentes, dans lequel le circuit sélectif de fréquence FM comprend un premier condensateur (C77), un second condensateur (C78), un troisième condensateur (C6) et un inducteur (L8), la première borne dudit premier condensateur (C77) est connectée audit point d'accès de signal d'antenne FM (101) et la seconde borne dudit premier condensateur (C77) est connectée à ladite puce FM (100) via ledit inducteur (L8), ; et dans lequel la première borne dudit premier condensateur est en outre connectée à une masse de référence via le second condensateur (C78), et la seconde borne dudit premier condensateur est connectée à la masse de référence via ledit troisième condensateur (C6).

5. Téléphone sans fil fixe selon l'une quelconque des revendications précédentes, dans lequel ladite puce FM (100) est une puce RDA5802E.

6. Téléphone sans fil fixe selon l'une quelconque des revendications précédentes, dans lequel ledit cordon de poignée possède une longueur de 3 m et est spiralé avec une longueur après torsion typiquement de 0,5 m, ce qui est réalisable pour fonctionner comme une antenne FM.

7. Procédé d'utilisation d'un cordon de poignée d'un téléphone sans fil fixe comme antenne FM, le téléphone sans fil fixe ayant une fonction radio FM et quatre fil du cordon de poignée, dans lequel les quatre fils comprennent deux fils pour connecter un émetteur et deux fils pour connecter un récepteur d'une poignée du téléphone sans fil fixe à une puce de bande de base (200), lequel procédé comprend les étapes consistant à :
A. choisir un (302) des deux fils du cordon de poignée qui connectent le récepteur à la puce de bande de base (200) comme antenne FM (FM_ANT), disposer un point d'accès de signal d'antenne FM (101) sur le fil choisi, et connecter une bille de ferrite (L3) en série entre le point d'accès de signal d'antenne FM et la puce de bande de base ;
B. connecter un circuit sélectif de fréquence FM (110) audit point d'accès de signal d'antenne FM et connecter ledit circuit sélectif de fréquence FM à une puce FM (100).
